# EUROPEAN PATENT SPECIFICATION

(11) **EP 1 260 744 B1**
(45) Date of publication and mention of the grant of the patent: **13.10.2004**
(21) Application number: 02010171.3
(22) Date of filing: 14.05.2002
(51) Int. Cl.: F16K 31/363, F15B 13/04

(54) **Valve for enabling the controls of a fluid-operated actuator**
Ventil zum Ermöglichen der Kontrolle eines fluidbetätigten Aktuators
Soupape permettant le contrôle d' un actionneur entraîné par un fluide

(30) Priority: 21.05.2001 IT BO20010317
(43) Date of publication of application: 27.11.2002
(73) Proprietor: Hydrocontrol S.p.A., 40060 Osteria Grande (IT)
(72) Inventor: Musiani, Massimo, 40061 Minerbio (Prov. of Bologna) (IT); Bulgarelli, Claudio, 41100 Modena (IT)
(74) Representative: Modiano, Guido, Dr.-Ing.

(56) References cited:
- DE-A- 1 550 452
- DE-A- 2 710 527
- FR-A- 2 270 501
- US-A- 3 083 730

## Description

The present invention relates to a valve for enabling the controls of a fluid-operated actuator, used particularly for the movement of excavators.

It is known that the control of a hydraulic actuation system controlled for example by an excavator uses a distribution unit constituted by multiple functional sections, two of which are dedicated to the actuation of the right and left tracks, the others being dedicated respectively to the positioning of the working arm of the excavator. It is also known that a corresponding number of sections, suitable to act as hydraulic switches for enabling or disabling the controls for the actuation of the earth-moving machine, is associated with the functional sections dedicated to track actuation. The presence of additional functional sections, in addition to increasing the complexity of the structure of the distribution unit, inevitably causes size problems owing to the excessive transverse dimensions of the distribution unit.

DE1550452 discloses a valve having the features as set forth in the precharacterizing portion of the appended claim 1.

The aim of the present invention is to obviate the above cited drawbacks by reducing the dimensions of the distribution unit without thereby renouncing the switches for enabling/disabling the hydraulic circuit suitable to actuate the earth-moving machine.

Within this aim, an object of the present invention is to provide a device having a structure that is simple, relatively easy to provide in practice, safe in use, effective in operation, and relatively low in cost.

Another object is to allow the valve to be installable both on the elements that actuate the earth-moving machine and on an oil inlet plate.

This aim and these and other objects which will become better apparent hereinafter, are achieved by the present valve for enabling the controls of a fluid-operated actuator, as defined in the appended claims.

Further characteristics and advantages will become better apparent from the following detailed description of a preferred but not exclusive embodiment of a valve for enabling the controls of a fluid-operated actuator, according to the present invention, illustrated by way of non-limitative embodiment in the accompanying drawings, wherein:
Figure 1 is a longitudinal sectional view of the valve according to the present invention in an assembly position;
Figure 2 is a longitudinal sectional view, in which the inlet of the valve is connected to the outlet and the actuation controls are disabled;
Figure 3 is a view of an intermediate working position;
Figure 4 is a view of a position in which the inlet is closed and the actuation controls of the actuator are enabled;
Figure 5 is a hydraulic diagram;
Figure 6 is a view of a fluid-operated distribution unit in which the valve is inserted.

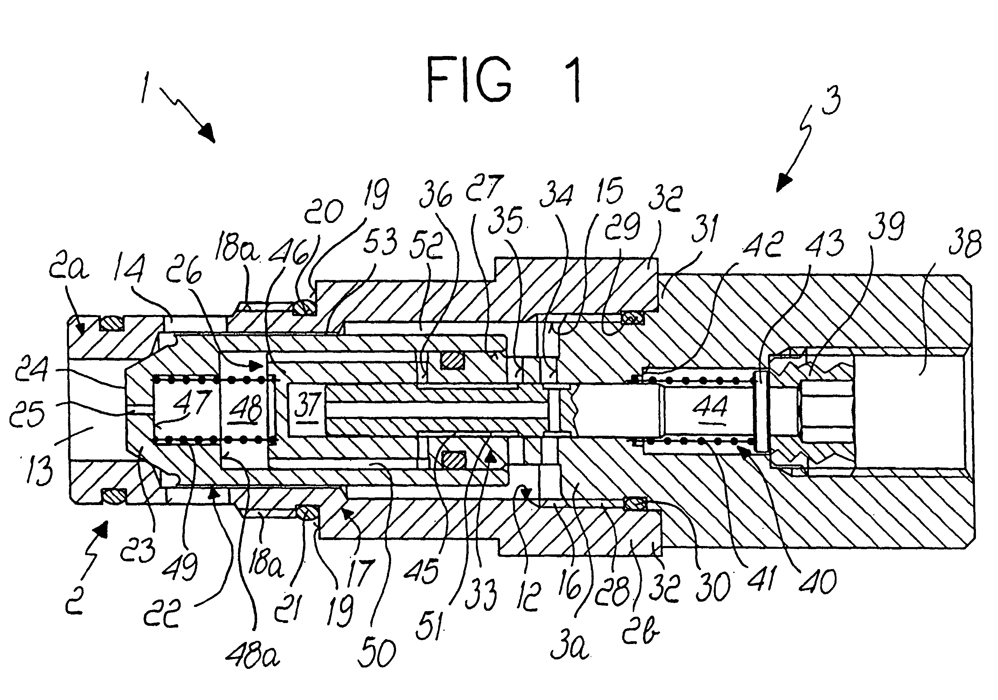

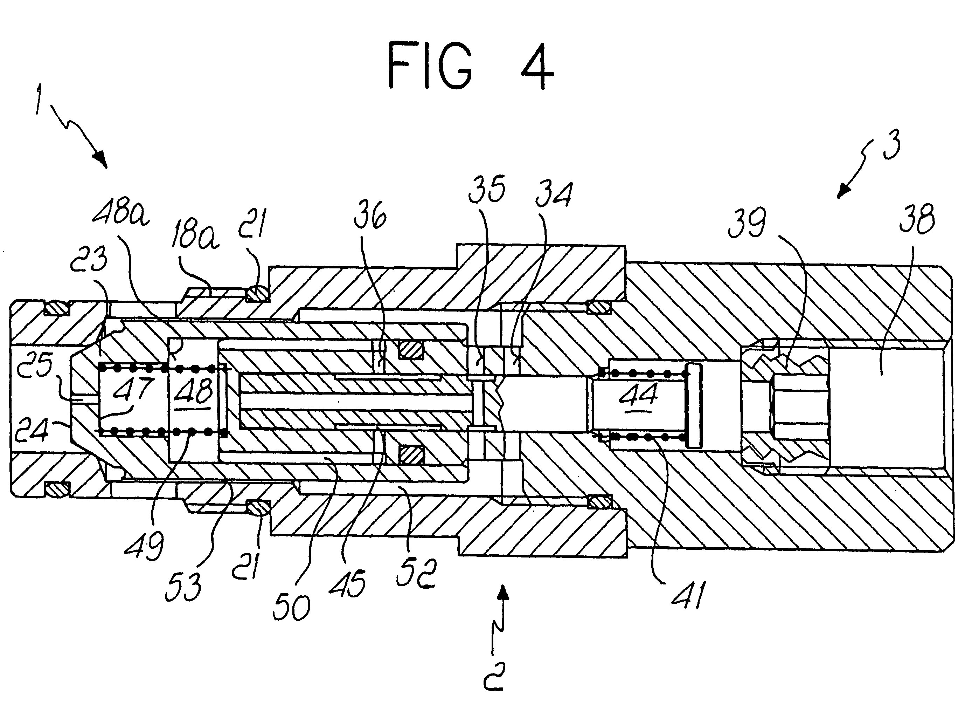

With reference to Figures 1 to 6, the reference numeral 1 generally designates a valve according to the invention.

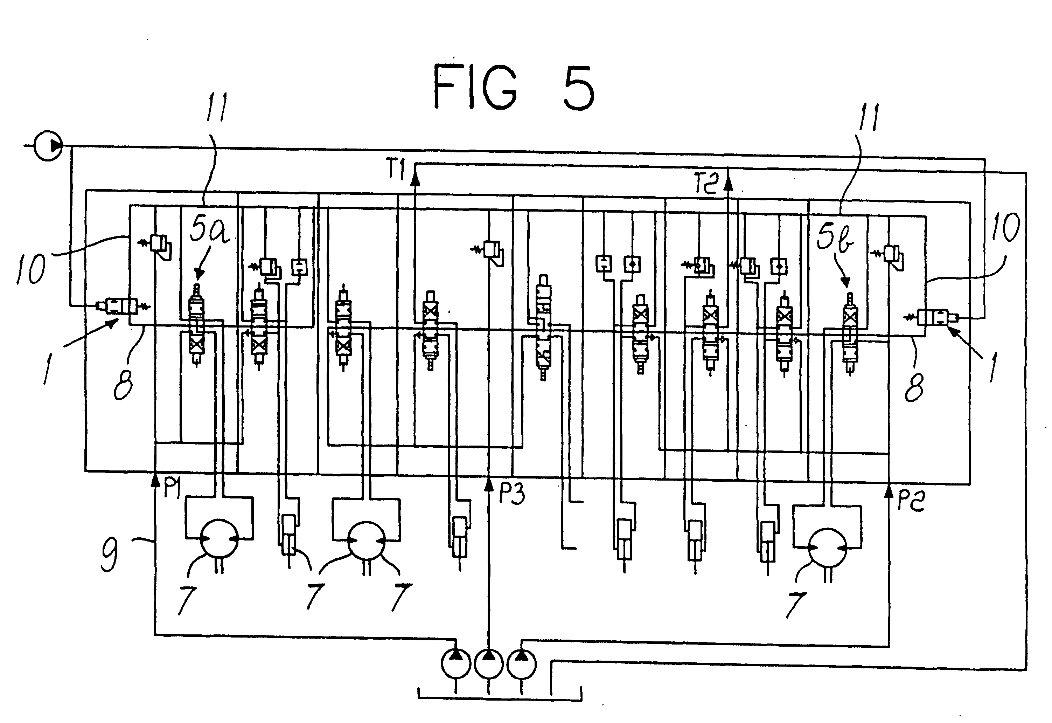

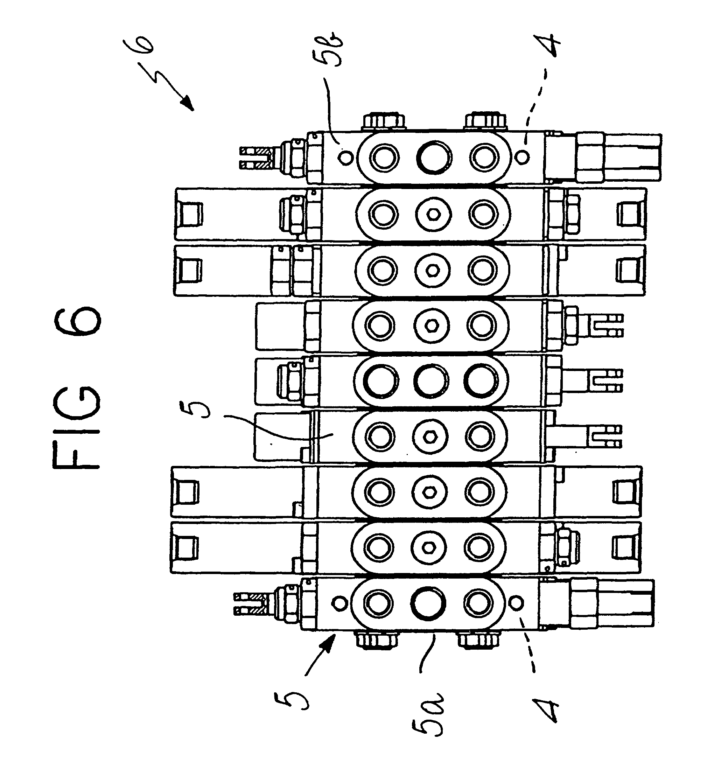

The valve 1 is constituted by a first body 2 and a second body 3, which are mutually connected hermetically, and is inserted with the first body 2 in a port 4 provided in the functional sections 5 of a distribution unit 6. The distribution unit 6 is constituted by a variable number of functional sections 5, each of which is reserved to the actuation of a corresponding actuator 7. In the case shown in Figures 5 and 6, the valve 1 is inserted in the outer functional sections 5a, 5b dedicated to the actuation of the actuators 7 for moving the tracks of an excavator. The functional sections 5a and 5b, as shown schematically in Figure 6, comprise a first duct 8, arranged between the port 4 and the feeder channel 9, and a second duct 10, which is arranged between the port 4 and the outlet channel 11.

The first body 2 comprises a longitudinal cavity 12, which forms, at an end 2a, an axial inlet 13 that is connected to the first duct 8, and radial outlets 14, which are arranged radially with respect to the longitudinal cavity 12 and are connected to the second duct 10; at the other end, the first body 2 comprises a cylindrical opening 15, which is internally provided with a threaded portion 16. The first body 2, in the outer central region 17, forms a thread 18a and an annular abutment region 19, which is suitable to abut against the flat peripheral portion of the port 4 of the functional section 5a, 5b. Between the abutment region 19 and the thread 18a an annular recess 20 is provided, which accommodates an annular sealing gasket 21. The longitudinal cavity 12 accommodates a flow control element 22, which has a frustum-shaped head 23 that has, on its flat face 24, an axial hole 25, which is connected to an axial cavity 26 that has, on the opposite side with respect to the hole 23, a cylindrical opening 27.

The second body 3 forms a cylindrical portion 3a, which is provided externally with a thread 28 by means of which it engages the threaded portion 16. The thread 28 is interrupted at an annular recess 29, which accommodates a sealing ring 30. A cylindrical expansion 31 is provided as continuation of the annular recess 29 and abuts against the edge 32 of the cylindrical opening 15, when the second body 3 is screwed into the first body 2. The portion 3a has an extension 33, which is inserted complementarily and hermetically in the axial cavity 26. The extension 33 comprises diametrical holes 34-36 and a cylindrical seat 37, which is coaxial to the axial cavity 26 and reaches a port 38 in which a stroke limiting grub screw 39 is screwed, forming a chamber 40 together with the end part of the cylindrical seat 37. The chamber 40 accommodates a spring 41, which is interposed coaxially between the bottom 42 and the head 43 of a slider 44 that has, in its central region, an annular recess 45. The end 46 of the extension 31 forms, together with the bottom 47 of the flow control element 22, a variable-volume pressurization chamber 48, and has a wider cross-section that forms a larger surface 48a that lies on a plane Π that is perpendicular to the longitudinal axis formed by the axial cavity. The pressurization chamber accommodates a spring 49, which is calibrated appropriately and pushes, in the assembled position, the flow control element 22 into the position for closing the inlet 13, isolating it from the outlets 14. The region between the end 46 and the diametrical hole 36 forms, together with the internal part of the flow control element 22, a first transfer chamber 50, which is connected, by means of the hole 36, to a second transfer chamber 51, which is formed by the annular recess 45. The second transfer chamber 51 is connected, in the stroke start position of the slider 44, with a third transfer chamber 52 and a passage 53, which leads into the outlet 14.

In the assembled configuration, the valve 1 has the appearance shown in Figure 1, wherein the inlet 13 is closed by the head 23 of the flow control element 22, which is pushed into the closure position by the spring 49. In this position, the pressurization chamber 48 has the maximum volume and is connected to the outlet 14 by means of the transfer chambers 50, 51 and 52, the diametrical holes 34-36 and the passage 53. In the same assembled configuration, the slider 44 is moved to the inactive position by the spring 41, by abutting with the head 43 against the stroke limiting grub screw 39, which allows to adjust the stroke of the slider 44.

In practical operation, after inserting the valve 1 in the port 4 of the functional sections 5a and 5b, the inlet 13 receives the fluid at a pressure P ₁.

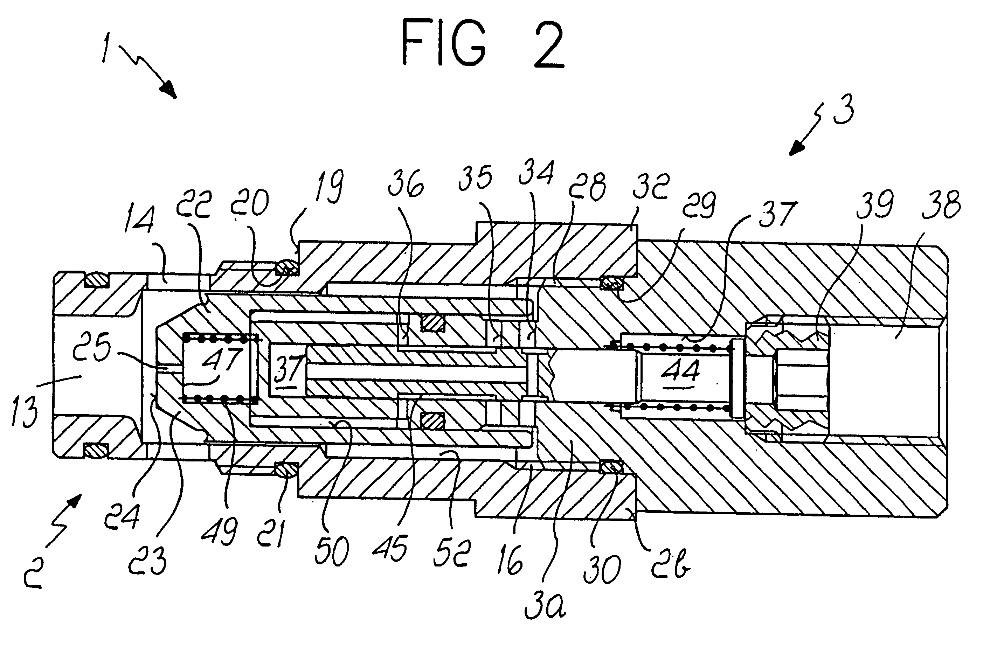

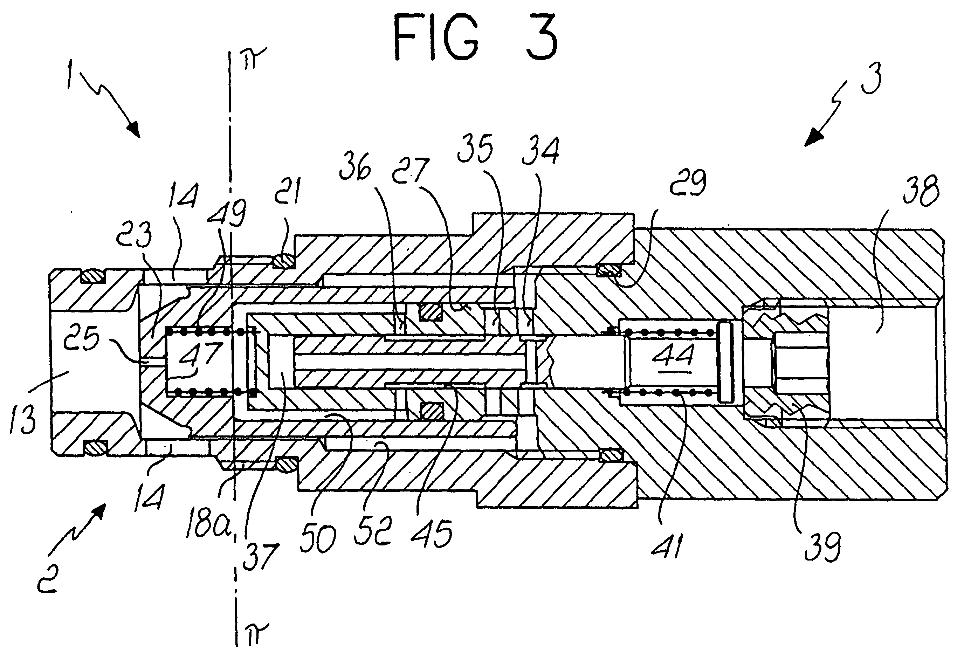

The fluid at the pressure P₁ applies a pressure to the flat face 24 until the flow control element 22 reaches the open position, as shown in Figure 2. In this situation, the pressure Pₜ established in the inlet region 13 is close to the pressure of the outlet 14 and correspondingly a considerable quantity of fluid directly reaches the outlet 14; at the same time, the other quantity of fluid, through the hole 25, enters the pressurization chamber 48, which in turn gradually reduces its volume, facilitating the outflow of the oil toward the outlet 14 through the transfer chambers 50, 51 and 52 and the passage 53. At this point, if one wishes to close the inlet 13 or enable the controls for actuating the actuators, a fluid having a pressure P_{P} of for example 40 bar is fed to the port 38; in this manner, the fluid propels the slider 44 from the inactive position to the stroke limit position, triggering a slight movement of the flow control element 22 toward the inlet 13, as shown in Figure 3. At this point, since the pressure inside the pressurization chamber 48 is Pₜ ≈ P_{I}, because the first transfer chamber 50 has been isolated from the second transfer chamber 51, and since the pusher surface of the pressurization chamber 48 is larger than the flat face 24, the internal thrust force exceeds the external thrust force, and therefore the flow control element closes the inlet 13.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A valve for enabling the controls of a fluid-operated actuator, comprising a first body (2) that forms a longitudinal cavity (12) that has, at one end (2a), an inlet (13) for high-pressure fluid and at least one outlet (14) for discharging said fluid, a flow control element (22) that forms internally an axial cavity (26) and can move in said longitudinal cavity (12) between a position that opens said inlet (13) and a position that closes said inlet (13) and viceversa, a second body (3) that is connected hermetically to the other end of said first body (2) and has an extension (33) that is inserted in said axial cavity (26) and, on the opposite side with respect to said extension (33), a port (38) suitable to receive a pressurized actuation fluid for the actuation of a slider (44) that can move in a cylindrical seat (37) of said extension (33) between an inactive position and a stroke limit position, said flow control element (22) forming, with respect to said extension (33), a variable-volume pressurization chamber (48), **characterized in that** said extension (33) is inserted hermetically in said axial cavity (26), and said flow control element (22) forming annular fluid transfer chambers (50,51,52) that are suitable to transfer the fluid that arrives from said inlet (13) toward said outlet (14), said pressurization chamber (48) and said transfer chambers (50,51,52) being detachably connected by said slider (44) in order to selectively move said flow control element (22) into said closure position, when said slider (44) is in the stroke limit position and said pressurization chamber (48) has the maximum volume, or into said open position, when said slider (44) is in the stroke start position and said pressurization chamber (48) has the minimum volume.

2. The valve according to claim 1, **characterized in that** said pressurization chamber (48) has a wider cross-section that forms a larger surface (48a), with respect to the cross-section of the bottom (47) of the flow control element (22), in the transition from said open position to said closure position, said larger surface (48a) being arranged on a plane (π) that is perpendicular to the longitudinal axis formed by said axial cavity (26).

3. The valve according to claim 1, **characterized in that** said valve is inserted hermetically in a port (4) formed in a functional section (5) of a fluid-operated distribution unit (6), said section (5) being suitable to actuate a fluid-operated actuator (7).

4. The valve according to claims 1 and 2, **characterized in that** said functional section (5) comprises internally a first duct (8), which is interposed between said port (4) and the feeder circuit for actuating said actuator (7), and a second duct (10), which is interposed between said port and the discharge circuit.

5. The valve according to claim 1, **characterized in that** said inlet (13) is axial.

6. The valve according to claim 1, **characterized in that** said discharge outlet (14) is radial.

7. The valve according to one or more of the preceding claims, **characterized in that** said flow control element (22) has a cylindrical opening (27) on the end that faces said extension (33) and a frustum-shaped head (23) on its opposite end.

8. The valve according to one or more of the preceding claims, **characterized in that** the flat face (24) of said head has an axial hole (25) that is suitable to connect said inlet (13) to said pressurization chamber (48).

9. The valve according to the preceding claims, **characterized in that** said flat face (24) has a smaller surface than the opposite surface of said pressurization chamber (48).

10. The valve according to the preceding claims, **characterized in that** a spring (49) is accommodated in said pressurization chamber (48).

11. The valve according to one or more of the preceding claims, **characterized in that** said extension (33) comprises a cylindrical seat (37) that runs axially up to said port (38).

12. The valve according to one or more of the preceding claims, **characterized in that** said extension (33) comprises diametrical holes (34,35,36) that intersect the central region of said cylindrical seat (37).

13. The valve according to the preceding claims, **characterized in that** said extension (33) forms, with respect to said flow control element (22), a first one of said transfer chambers (50).

14. The valve according to one or more of the preceding claims, **characterized in that** said slider (44) comprises, in its central region, an annular recess (45) that forms, together with said flow control element (22), a second transfer chamber (51) that is suitable to be connected to a third transfer chamber (52) by means of the central diametrical hole (36).

15. The valve according to the preceding claims, **characterized in that** said third transfer chamber (52) is connected to said outlet (14) by means of a passage (53).

16. The valve according to one or more of the preceding claims, **characterized in that** said actuation fluid is substantially at 40 bar.

## Patentansprüche

1. Ventil zum Ermöglichen der Steuerung eines fluidbetätigten Aktuators, bestehend aus einem ersten Körper (2), in dem ein länglicher Hohlraum (12) ausgebildet ist, der an seinem einen Ende (2a) einen Einlass (13) für Hochdruckfluid und wenigstens einen Auslass (14) zum Ausströmen dieses Fluids, ein Durchflusssteuerungselement (22), das einen inneren axialen Hohlraum (26) bildet, und in dem länglichen Hohlraum (12) zwischen einer Position, in der der Einlass (13) geöffnet wird, und einer Position, in der der Einlass (13) geschlossen wird, hin- und herbewegt werden kann, aufweist, einem zweiten Körper (3), der hermetisch mit dem anderen Ende des ersten Körpers (2) verbunden ist und eine Verlängerung (33) aufweist, die in den axialen Hohlraum (26) eingesetzt ist und auf der der Verlängerung (33) gegenüberliegenden Seite mit einer Öffnung (38) zur Aufnahme eines mit Druck beaufschlagten Betätigungsfluids zur Betätigung eines Schiebers (44) versehen ist, der in einem zylindrischen Sitz (37) der Verlängerung (33) zwischen einer inaktiven Position und einer Hubgrenzposition bewegt werden kann, wobei dieses Durchflusssteuerelement (22) in Bezug auf die Verlängerung (33) eine Druckkammer (48) mit veränderbarem Volumen bildet, **dadurch gekennzeichnet, dass** die Verlängerung (33) hermetisch in den axialen Hohlraum (26) eingesetzt ist und das Durchflusssteuerungselement (22) ringförmige Fluidübertragungskammem (50, 51, 52) zur Übertragung des vom Einlass (13) zum Auslass (14) strömenden Fluids bildet, wobei die Druckkammer (48) und die Übertragungskammem (50, 51, 52) lösbar durch den Schieber (44) miteinander verbunden sind, um das Durchflusssteuerungselement (22) wahlweise in die geschlossene Position zu bewegen, wenn sich der Schieber (44) in der Hubgrenzposition befindet und die Druckkammer (48) ihr maximales Volumen erreicht hat, oder in die geöffnete Position, wenn sich der Schieber (44) in der Hubstartposition befindet und die Druckkammer (48) ihr minimales Volumen erreicht hat.

2. Ventil nach Anspruch 1, **dadurch gekennzeichnet, dass** die Druckkammer (48) in dem Übergang von der geöffneten zu der geschlossenen Position einen größeren Querschnitt mit einer im Vergleich zu dem Boden (47) des Durchflussregelungselementes (22) größeren Oberfläche (48a) aufweist, wobei diese größere Oberfläche (48a) auf einer Ebene (π) senkrecht zu der durch den axialen Hohlraum (26) gebildeten Längsachse angeordnet ist.

3. Ventil nach Anspruch 1, **dadurch gekennzeichnet, dass** das Ventil hermetisch in eine in einem Funktionsabschnitt (5) einer fluidbetätigten Verteilungseinheit (6) ausgebildeten Öffnung (4) eingesetzt ist, wobei sich dieser Abschnitt (5) für die Betätigung eines fluidbetätigten Aktuators (7) eignet.

4. Ventil nach den Ansprüchen 1 und 2, **dadurch gekennzeichnet, dass** der Funktionsabschnitt (5) innen eine erste Leitung (8), die zwischen der Öffnung (4) und dem Versorgungskreis angeordnet ist, zur Betätigung des Aktuators (7) und eine zweite Leitung (10), die zwischen dieser Öffnung und dem Abflusskreis angeordnet ist, aufweist.

5. Ventil nach Anspruch 1, **dadurch gekennzeichnet, dass** der Einlass (13) axial angeordnet ist.

6. Ventil nach Anspruch 1, **dadurch gekennzeichnet, dass** der Auslass (14) radial angeordnet ist.

7. Ventil nach einem oder mehreren der vorhergehenden Ansprüche, **dadurch gekennzeichnet, dass** das Durchflusssteuerungselement (22) eine zylindrische Öffnung (27) an dem der Verlängerung (33) gegenüberliegenden Seite und einen kegelstumpfförmigen Kopf (23) an seinem entgegengesetzten Ende aufweist.

8. Ventil nach einem oder mehreren der vorhergehenden Ansprüche, **dadurch gekennzeichnet, dass** in der flachen Stirnfläche (24) dieses Kopfes eine axiale Bohrung (25) zur Verbindung des Einlasses (13) mit der Druckkammer (48) ausgebildet ist.

9. Ventil nach den vorhergehenden Ansprüchen, **dadurch gekennzeichnet, dass** die Fläche dieser flachen Stirnfläche (24) kleiner ist als die gegenüberliegende Fläche der Druckkammer (48).

10. Ventil nach den vorhergehenden Ansprüchen, **dadurch gekennzeichnet, dass** eine Feder (49) in der Druckkammer (48) angeordnet ist.

11. Ventil nach einem oder mehreren der vorhergehenden Ansprüche, **dadurch gekennzeichnet, dass** die Verlängerung (33) einen zylindrischen Sitz (37) aufweist, der axial bis zu der Öffnung (38) verläuft.

12. Ventil nach einem oder mehreren der vorhergehenden Ansprüche, **dadurch gekennzeichnet, dass** die Verlängerung (33) diametrale Löcher (34, 35, 36), die den mittleren Bereich des zylindrischen Sitzes schneiden, aufweist.

13. Ventil nach den vorhergehenden Ansprüchen, **dadurch gekennzeichnet, dass** die Verlängerung (33) in Bezug auf das Durchflusssteuerelement (22) eine erste Übertragungskammer (50) bildet.

14. Ventil nach einem oder mehreren der vorhergehenden Ansprüche, **dadurch gekennzeichnet, dass** in dem mittleren Bereich des Schiebers (44) eine ringförmige Ausnehmung (45) ausgebildet ist, die zusammen mit dem Durchflusssteuerungselement (22) eine zweite Übertragungskammer (51) bildet, die mit einer dritten Übertragungskammer (52) über das mittlere diametrale Loch (36) verbindbar ist.

15. Ventil nach den vorhergehenden Ansprüchen, **dadurch gekennzeichnet, dass** die dritte Übertragungskammer (52) mit dem Auslass (14) über einen Kanal (53) verbunden ist.

16. Ventil nach einem oder mehreren der vorhergehenden Ansprüche, **dadurch gekennzeichnet, dass** das Betätigungsfluid im Wesentlichen unter einem Druck von 40 bar steht.

## Revendications

1. Soupape pour permettre le contrôle d'un actionneur fonctionnant par fluide, comprenant un premier corps (2) qui forme une cavité longitudinale (12) qui présente, à une extrémité (2a), une entrée (13) pour un fluide à haute pression et au moins une sortie (14) pour l'évacuation dudit fluide, un élément de régulation de débit (22) qui forme intérieurement une cavité axiale (26) et peut se déplacer dans ladite cavité longitudinale (12) entre une position qui ouvre ladite entrée (13) et une position qui ferme ladite entrée (13) et inversement, un second corps (3) qui est relié de façon étanche à l'autre extrémité dudit premier corps (2) et présente un prolongement (33) qui est inséré dans ladite cavité axiale (26) et, du côté opposé par rapport audit prolongement (33), un orifice (38) approprié pour recevoir un fluide d'actionnement pressurisé pour l'actionnement d'un coulisseau (44) qui peut se déplacer dans un siège cylindrique (37) dudit prolongement (33) entre une position inactive et une position de fin de course, ledit élément de régulation de débit (22) formant, par rapport audit prolongement (33), une chambre de pressurisation à volume variable (48), **caractérisée en ce que** ledit prolongement (33) est inséré de façon étanche dans ladite cavité axiale (26), et ledit élément de régulation de débit (22) formant des chambres annulaires de transfert de fluide (50, 51, 52) qui sont appropriées pour transférer le fluide qui arrive de ladite entrée (13) vers ladite sortie (14), ladite chambre de pressurisation (48) et lesdites chambres de transfert (50, 51, 52) étant liées de façon amovible par ledit coulisseau (44) de façon à déplacer sélectivement l'élément de régulation de débit (22) dans ladite position de fermeture, quand ledit coulisseau (44) est dans la position de fin de course et que ladite chambre de pressurisation (48) a le volume maximal, ou dans ladite position ouverte, quand ledit coulisseau (44) est dans la position de début de course et que ladite chambre de pressurisation (48) a le volume minimal.

2. Soupape selon la revendication 1.
**caractérisée en ce que** ladite chambre de pressurisation (48) a une section transversale plus large qui forme une surface plus grande (48a), par rapport à la section transversale du fond (47) de l'élément de régulation de débit (22), dans la transition de ladite position ouverte vers ladite position fermée, ladite surface plus grande (48a) étant agencée sur un plan (π) qui est perpendiculaire à l'axe longitudinal formé par ladite cavité axiale (26).

3. Soupape selon la revendication 1,
**caractérisée en ce que** ladite soupape est insérée de façon étanche dans un orifice (4) réalisé dans une section fonctionnelle (5) d'une unité de distribution fonctionnant par fluide (6), ladite section (5) étant appropriée pour actionner un actionneur fonctionnant par fluide (7).

4. Soupape selon les revendications 1 et 2,
**caractérisée en ce que** ladite section fonctionnelle (5) comprend intérieurement un premier conduit (8), qui est disposé entre ledit orifice (4) et le circuit d'alimentation pour l'actionnement dudit actionneur (7), et un second conduit (10), qui est disposé entre ledit orifice et le circuit d'évacuation.

5. Soupape selon la revendication 1,
**caractérisée en ce que** ladite entrée (13) est axiale.

6. Soupape selon la revendication 1,
**caractérisée en ce que** ladite sortie d'évacuation (14) est radiale.

7. Soupape selon une ou plusieurs des revendications précédentes,
**caractérisée en ce que** ledit élément de régulation de débit (22) a une ouverture cylindrique (27) sur l'extrémité qui fait face audit prolongement (33) et une tête tronconique (23) sur son extrémité opposée.

8. Soupape selon une ou plusieurs des revendications précédentes,
**caractérisée en ce que** la face plate (24) de ladite tête présente un trou axial (25) qui est approprié pour relier ladite entrée (13) à ladite chambre de pressurisation (48).

9. Soupape selon les revendications précédentes,
**caractérisée en ce que** ladite face plate (24) a une surface inférieure à la surface opposée de ladite chambre de pressurisation (48).

10. Soupape selon les revendications précédentes,
**caractérisée en ce qu'**un ressort (49) est logé dans ladite chambre de pressurisation (48).

11. Soupape selon une ou plusieurs des revendications précédentes,
**caractérisée en ce que** ledit prolongement (33) comprend un siège cylindrique (37) qui s'étend axialement jusqu'audit orifice (38).

12. Soupape selon une ou plusieurs des revendications précédentes,
**caractérisée en ce que** ledit prolongement (33) comprend des trous diamétraux (34, 35, 36) qui se coupent dans la région centrale dudit siège cylindrique (37).

13. Soupape selon les revendications précédentes,
**caractérisée en ce que** ledit prolongement (33) forme, par rapport audit élément de régulation de débit (22), une première desdites chambres de transfert (50).

14. Soupape selon une ou plusieurs des revendications précédentes,
**caractérisée en ce que** ledit coulisseau (44) comprend, dans sa région centrale, un évidement annulaire (45) qui forme, avec ledit élément de régulation de débit (22), une deuxième chambre de transfert (51) qui est appropriée pour être reliée à une troisième chambre de transfert (52) par l'intermédiaire du trou diamétral central (36).

15. Soupape selon les revendications précédentes,
**caractérisée en ce que** ladite troisième chambre de transfert (52) est reliée à ladite sortie (14) par l'intermédiaire d'un passage (53).

16. Soupape selon une ou plusieurs des revendications précédentes,
**caractérisée en ce que** ledit fluide d'actionnement est sensiblement à 40 bars.
